# EUROPEAN PATENT SPECIFICATION

(11) **EP 2 910 604 B1**
(45) Date of publication and mention of the grant of the patent: **13.04.2022**
(21) Application number: 13848067.8
(22) Date of filing: 16.10.2013
(51) Int. Cl.: C08L 27/16, C08J 5/18, C08K 3/20, G02B 3/14, G02B 26/00, G02B 26/02, G02F 1/19, H01G 4/18

(54) **HIGH DIELECTRIC FILM**
HOCHDIELEKTRISCHE FOLIE
FILM À HAUTE CONSTANTE DIÉLECTRIQUE

(30) Priority: 16.10.2012 JP 2012228973; 18.01.2013 JP 2013007606
(43) Date of publication of application: 26.08.2015
(73) Proprietor: Daikin Industries, Ltd., Osaka-shi, Osaka 530-8323 (JP)
(72) Inventor: TATEMICHI Mayuko, Osaka 530-8323 (JP); OTA Miharu, Osaka 530-8323 (JP); YOKOTANI Kouji, Osaka 530-8323 (JP); KOMATSU Nobuyuki, Osaka 530-8323 (JP); NAKAMURA Hisako, Osaka 530-8323 (JP); SHIGENAI Fumiko, Osaka 530-8323 (JP); HAZAMA Takeshi, Osaka 530-8323 (JP); KINOSHITA Masakazu, Osaka 530-8323 (JP); KOH Meiten, Osaka 530-8323 (JP); ISHIKAWA Takuji, Osaka 530-8323 (JP); IGUCHI Takashi, Osaka 530-8323 (JP); UCHIDA Kazunobu, Osaka 530-8323 (JP); FUKATANI Tomoyuki, Osaka 530-8323 (JP); KITAHARA Takahiro, Osaka 530-8323 (JP); KODANI Tetsuhiro, Osaka 530-8323 (JP)
(74) Representative: Hoffmann Eitle
(86) International application number: PCT/JP2013/078073
(87) International publication number: WO 2014/061700

(56) References cited:
- WO-A1-2010/114089
- WO-A1-2011/089948
- WO-A1-2012/108463
- WO-A1-2012/108463
- WO-A1-2012/172876
- JP-A- H0 315 005
- JP-A- S6 040 137
- JP-A- H05 249 315
- JP-A- S62 193 812
- JP-A- 2005 015 609
- JP-A- 2006 241 195
- JP-A- 2009 038 088
- US-A- 4 615 943
- E J ; ; Mcalpine ET AL: "Compositional Variation of the Structure and Solid-state Transformations of Vinylidene Fluoride/Tetrafluoroethylene Copolymers", Macromolecules J . Am. Chem. SOC. J. Chem. Soc. Eur. Polym. J. Elsevier Applied Science aday Trans. Schnabel, W. Polym. Photochem. J. J. Phys. Chem, 1 January 1988 (1988-01-01), pages 78-83, XP055270207, Retrieved from the Internet: URL:http://pubs.acs.org/doi/pdf/10.1021/ma 00179a017
- Anonymous: "Constant Thickness Film Maker & Thin Film Making Kits For Polymers", , 24 August 2004 (2004-08-24), XP055513677, Retrieved from the Internet: URL:http://www.internationalcrystal.net/ic l80.htm [retrieved on 2018-10-09]

## Description

### TECHNICAL FIELD

The present invention relates to a high dielectric film.

### BACKGROUND ART

High dielectric films have a high dielectric constant, and thus they are proposed to be used as, for example, films for electrowetting.

The "electrowetting" is a technology of modifying the wettability of a surface of a hydrophobic dielectric film between the hydrophobic (water-repellent) and hydrophilic states in response to the application of an electric field. The electrowetting technology enables driving of a conductive liquid on the surface. This mechanism can drive a conductive liquid without any mechanically movable parts, so that it is advantageous to downsizing and life expansion of devices. Such a situation leads to proposals in regard to application of electrowetting devices to, in particular, optical elements in display devices, liquid lenses capable of freely changing their focal lengths, and delivery of low-volume liquid in inspection instruments.

However, such driving of a conductive liquid requires application of high voltage, which results in high electric energy consumption of a device. This problem inhibits the practical use of electrowetting devices.

Here, the wettability of a surface of a hydrophobic dielectric film is represented by a contact angle.

The contact angle θᵥ between the conductive liquid and the hydrophobic dielectric film with an applied voltage of V is known to be represented by the following formula.$cos {θ}_{v} = cos {θ}_{0} + \frac{{ε}_{0} ε}{2 {lγ}_{LG}} {V}^{2}$

The symbols in the formula mean the following.

θᵥ: contact angle between conductive liquid and hydrophobic dielectric film with voltage of V applied
θ₀: contact angle between conductive liquid and hydrophobic dielectric film with no voltage applied
γ_{LG}: surface tension of conductive liquid
ε: dielectric constant of hydrophobic dielectric film
ε₀: electric constant under vacuum
1: thickness of dielectric film
V: voltage applied

As mentioned above, the conductive liquid is driven in response to a change in the wettability of the hydrophobic dielectric film. Thus, as is clear from the above formula, reduction in the voltage for driving a conductive liquid requires reduction in the thickness of a dielectric film or an increase in the dielectric constant.

Reduction in the thickness of a film, however, easily causes generation of pinholes, resulting in electrical breakdown. Further, in some conventional cases, hydrophobic films are formed from a fluorine material, but such hydrophobic films have a low dielectric constant (5 or lower).

In order to solve these problems, for example, Patent Literature 1 proposes a thin dielectric film formed by anodizing only the surface of metal which is to serve as an electrode. This thin dielectric film can prevent generation of pinholes, making it possible to create thinner films of the dielectric film, resulting in a low driving voltage. Still, a more improved technique is demanded which enables driving of a conductive liquid with a lower voltage.

In order to solve the above problems, Patent Literature 2 discloses a film containing a vinylidene fluoride polymer (A) and inorganic oxide particles (B). This film is a hydrophobic dielectric film for electrowetting which enables driving of a conductive liquid with a low voltage.

### CITATION LIST

### - Patent Literature

Patent Literature 1: JP 2008-107826 A
Patent Literature 2: WO 2012/108463

### SUMMARY OF INVENTION

### - Technical Problem

Nevertheless, conventional dielectric films containing vinylidene fluoride resin disadvantageously have a high dissipation factor. The researchers have failed to develop a film having both a high dielectric constant and a low dissipation factor.

The present invention aims to provide a film having a high dielectric constant and a low dissipation factor.

### - Solution to Problem

The present inventors have performed studies on a film having a high dielectric constant and a low dissipation factor, thereby finding that a film comprising a vinylidene fluoride/tetrafluoroethylene copolymer at a specific ratio and including a β-crystal structure at a specific ratio has a high dielectric constant and a low dissipation factor. As a result, the inventors have completed the present invention.

Specifically, the present invention relates to a high dielectric film comprising a vinylidene fluoride/tetrafluoroethylene copolymer (A) and inorganic oxide particles (B), wherein the copolymer (A) has a mole ratio (vinylidene fluoride)/(tetrafluoroethylene) of 95/5 to 80/20, includes an α-crystal structure and a β-crystal structure, with the ratio of the β-crystal structure being 50% or more, and the thickness of the film is 0.01 to 50 µm.

### - Advantageous Effects of Invention

The high dielectric film of the present invention having the above structure has a high dielectric constant and a low dissipation factor.

### BRIEF DESCRIPTION OF THE DRAWINGS

Fig. 1 is a cross-sectional view illustrating the whole structure of an optical element which is one embodiment of an electrowetting device.
Fig. 2 is a schematic diagram illustrating the behavior of the optical element illustrated in Fig. 1.
Fig. 3 is a cross-sectional view illustrating one specific example of a laminate comprising the high dielectric film of the present invention.
Fig. 4 is a cross-sectional view illustrating another specific example of a laminate comprising the high dielectric film of the present invention.
Fig. 5 is a cross-sectional view illustrating still another specific example of a laminate comprising the high dielectric film of the present invention.
Fig. 6 is a cross-sectional view illustrating yet another specific example of a laminate comprising the high dielectric film of the present invention.
Fig. 7 is a cross-sectional view illustrating the whole structure of an optical element (varifocal lens) which is one embodiment of an electrowetting device.

### DESCRIPTION OF EMBODIMENTS

The high dielectric film of the present invention comprises a vinylidene fluoride (VdF)/tetrafluoroethylene (TFE) copolymer (A). The VdF/TFE copolymer (A) satisfies a mole ratio (VdF/TFE) of 95/5 to 80/20. The high dielectric film of the present invention with a mole ratio (VdF/TFE) within this range has a high dielectric constant and a low dissipation factor. If the mole ratio of VdF is too low, the film disadvantageously has a low dielectric constant. If the mole ratio of VdF is too high, the α-crystal structure occupies the most part of the film, so that the film has a high dissipation factor. The mole ratio (VdF/TFE) is preferably 94/6 to 90/10.

The composition of the VdF/TFE copolymer (A) can be calculated from the integrated values of the peaks assigned to the respective monomer units measured by F-NMR using a nuclear magnetic resonance device.

The VdF/TFE copolymer (A) may or may not further comprise a polymer unit derived from a monomer that is copolymerizable with VdF and TFE.

The amount of the polymer unit derived from a monomer that is copolymerizable with VdF and TFE is preferably 0.1 to 10 mol% in 100 mol% of all the polymer units. This amount is more preferably 1 to 5 mol%.

Examples of the monomer that is copolymerizable with VdF and TFE include fluoroolefins such as chlorotrifluoroethylene (CTFE), trifluoroethylene (TrFE), monofluoroethylene, hexafluoropropylene (HFP), and perfluoro(alkyl vinyl ether) (PAVE); fluoroacrylates; and function-containing fluoromonomers. Preferred are CTFE, TrFE, and HFP because they are well soluble in a solvent.

The high dielectric film of the present invention includes an α-crystal structure and a β-crystal structure, or includes only a β-crystal structure. The β-crystal structure constitutes 50% or more of the VdF/TFE copolymer (A). Even though a VdF-rich VdF/TFE copolymer is likely to be occupied with the α-crystal structure and the high dielectric film of the present invention comprises a VdF-rich VdF/TFE copolymer (A), the most part of the high dielectric film is occupied with the β-crystal structure. Therefore, the high dielectric film of the present invention is a novel high dielectric film. Owing to these characteristics, the film has a high dielectric constant and a low dissipation factor. In addition, the high dielectric film of the present invention is excellent in insulation properties. Thus, the dielectric constant thereof does not decrease even after long-time application of a high voltage. The ratio of the β-crystal structure is preferably 70% or more, and more preferably 80% or more. The β-crystal structure may account for 100%.

The ratio of the β-crystal structure is a value determined from the ratio between the absorbance at the absorption peak (839 cm⁻¹) assigned to the β-crystal and the absorbance at the absorption peak (763 cm⁻¹) assigned to the α-crystal using a Fourier transform infrared (FT-IR) spectrophotometer.

The ratio of the β-crystal structure can be calculated on the basis of the results of the FT-IR determination and the following formula. $F \left(β\right) = X β / \left(Xα+Xβ\right) = A β / \left(1.26Aα+Aβ\right)$
F(β): ratio of β-crystal structure
Xα: crystallinity of α-crystal
Xβ: crystallinity of β-crystal
Aα: absorbance at 763 cm⁻¹
Aβ: absorbance at 839 cm⁻¹
Kβ/Kα = 1.26 (ratio between absorption coefficient of β-crystal (839 cm⁻¹) and absorption coefficient of α-crystal (763 cm⁻¹))

The VdF/TFE copolymer (A) preferably has a melting point of 130°C to 170°C. The melting point is more preferably 135°C to 165°C, and still more preferably 140°C to 160°C.

The melting point of the VdF/TFE copolymer (A) is determined as a temperature corresponding to the local maximum on the heat-of-fusion curve obtained at a temperature-increasing rate of 10°C/min using a differential scanning calorimetry (DSC) device.

For good voltage resistance, insulation properties, and high dielectric constant, the dielectric constant (25°C, 1 kHz) of the VdF/TFE copolymer (A) is preferably 7 or higher, more preferably 8 or higher, and still more preferably 9 or higher.

The upper limit of the dielectric constant is not particularly limited, and it is, for example, 12.

The dielectric constant (ε) of the VdF/TFE copolymer (A) is a value calculated from the capacitance (C) measured using an LCR meter, the area (S) of the electrode, and the thickness (d) of the film using the following formula: $C = ε \times {ε}_{0} \times S / d$ wherein ε₀ represents the electric constant under vacuum.

For high dielectricity, the high dielectric film of the present invention preferably comprises 80% by mass or more, more preferably 85% by mass or more, and still more preferably 90% by mass or more of the VdF/TFE copolymer (A). The upper limit of the amount of the VdF/TFE copolymer (A) is not limited, and may be 100% by mass or 99% by mass, for example.

The high dielectric film of the present invention further comprises inorganic oxide particles (B).

The inorganic oxide particles (B) give a high dielectric constant to the high dielectric film of the present invention.

Also, the particles (B) can greatly improve the volume resistivity while maintaining the high dielectric constant.

The inorganic oxide particles (B) used in the present invention preferably comprise at least one of the following inorganic oxide particles.

(B1) Inorganic oxide particles of a metal element selected from group 2, group 3, group 4, group 12, or group 13 of the periodic table, or inorganic oxide composite particles thereof.

Examples of the metal element include Be, Mg, Ca, Sr, Ba, Y, Ti, Zr, Zn, and Al. In particular, an oxide of Al, Mg, Y, or Zn is preferred because it can be used for many purposes and is inexpensive, and has a high volume resistivity.

Specifically, particles of at least one selected from the group consisting of Al₂O₃, MgO, ZrO₂, Y₂O₃, BeO, and MgO·Al₂O₃ are preferred because these particles have a high volume resistivity.

In particular, Al₂O₃ whose crystal structure is the γ type is preferred because it has a large specific surface area and is well dispersible in the VdF/TFE copolymer (A).

(B2) Inorganic oxide composite particles represented by the formula (1):

M¹ₐ₁M²_{b1}O_{c1}

wherein M¹ is a metal element in group 2; M² is a metal element in group 4; a1 is 0.9 to 1.1; b1 is 0.9 to 1.1; c1 is 2.8 to 3.2; and M¹ and M² may each include multiple metal elements.

Preferable examples of the metal element in group 4 include Ti and Zr, and preferable examples of the metal element in group 2 include Mg, Ca, Sr, and Ba.

Specifically, particles of at least one selected from the group consisting of BaTiO₃, SrTiO₃, CaTiO₃, MgTiO₃, BaZrO₃, SrZrO₃, CaZrO₃, and MgZrO₃ are preferred because these particles have a high volume resistivity.

(B3) Inorganic oxide composite particles of silicon oxide and an oxide of a metal element in group 2, group 3, group 4, group 12, or group 13 of the periodic table.

Such particles are composite particles of the inorganic oxide particles (B1) and silicon oxide. Specific examples thereof include particles of at least one selected from the group consisting of 3A1₂O₃·2SiO₂, 2MgO·SiO₂, ZrO₂·SiO₂, and MgO.SiO₂.

The inorganic oxide particles (B) do not necessarily have a high dielectricity, and they may appropriately be selected in accordance with the purpose of the resulting high dielectric film.

For example, use of the oxide particles (B1) of one inexpensive metal which can be used in many uses, in particular Al₂O₃ or MgO, can improve the volume resistivity. The dielectric constant (1 kHz, 25°C) of the oxide particles (B1) of one metal is typically lower than 100, and preferably 10 or lower.

In order to improve the dielectric constant, the inorganic oxide particles (B) may be metal oxide particles (e.g., one species of the particles (B2) and (B3)) having ferroelectricity (having a dielectric constant (1 kHz, 25°C) of 100 or higher).

Examples of the inorganic material constituting the ferroelectric metal oxide particles (B2) and (B3) include, but are not limited to, composite metal oxides, and complexes, solid solutions, and sol-gel materials thereof.

The high dielectric film of the present invention preferably contains 0.01 to 300 parts by mass of the inorganic oxide particles (B) for 100 parts by mass of the copolymer (A). The amount of the particles (B) is more preferably 0.1 to 100 parts by mass.

Too much inorganic oxide particles (B) may be difficult to disperse in the copolymer (A) uniformly, and may deteriorate the electric insulation properties (voltage resistance).

A high dielectric film in which the amount of the inorganic oxide particles (B) is not smaller than 0.01 parts by mass but smaller than 300 parts by mass for 100 parts by mass of the copolymer (A) is one preferable embodiment of the present invention. A film containing 300 parts by mass or more of the particles (B) may be fragile and have a low tensile strength. In this case, the upper limit of the amount of the particles (B) is more preferably 200 parts by mass, and still more preferably 150 parts by mass. Too less inorganic oxide particles (B) are less likely to improve the electric insulation properties. Thus, the lower limit of the amount of the particles (B) is more preferably 0.1 parts by mass, still more preferably 0.5 parts by mass, and particularly preferably 1 part by mass.

The inorganic oxide particles (B) preferably have as small an average primary particle size as possible, and are particularly preferably what is called nanoparticles having an average particle size of 1 µm or smaller. Even a small amount of such inorganic oxide nanoparticles dispersed uniformly can greatly improve the electric insulation properties of the film. The average primary particle size is more preferably 800 nm or smaller, still more preferably 500 nm or smaller, and particularly preferably 300 nm or smaller. The average particle size may have any lower limit. In order to avoid difficulty in production and uniform dispersion, and to suppress a cost increase, the average primary particle size is preferably 10 nm or greater, more preferably 20 nm or greater, and still more preferably 50 nm or greater.

The average primary particle size of the inorganic oxide particles (B) was determined using a laser diffraction scattering particle size distribution analyzer (trade name: LA-920, HORIBA, Ltd.).

The inorganic oxide particles (B) preferably have a dielectric constant (25°C, 1 kHz) of 10 or higher. In order to increase the dielectric constant of the resulting high dielectric film, the dielectric constant of the particles (B) is more preferably 100 or higher, and still more preferably 300 or higher. The upper limit is not particularly limited, and is typically about 3000.

The dielectric constant (ε) (25°C, 1 kHz) of the inorganic oxide particles (B) is a value calculated on the basis of the capacitance (C) determined using an LCR meter, the electrode area (S), and the thickness (d) of a sintered body using the following formula: $C = ε \times {ε}_{0} \times S / d$ wherein ε₀ represents the electric constant under vacuum.

### (Other components)

The high dielectric film of the present invention may contain other components such as an affinity improver, if desired.

An affinity improver can improve the affinity between the inorganic oxide particles (B) and the copolymer (A), allow the inorganic oxide particles (B) to disperse uniformly in the copolymer (A), bond the inorganic oxide particles (B) and the copolymer (A) firmly in the film, suppress generation of voids, and increase the dielectric constant.

The affinity improver may advantageously be a coupling agent, a surfactant, or an epoxy-containing compound.

Examples of the "coupling agent" as an affinity improver include organotitanium compounds, organosilane compounds, organozirconium compounds, organoaluminum compounds, and organophosphorus compounds.

Examples of the organotitanium compounds include coupling agents such as titanium alkoxylates, titanium chelates, and titanium acylates. Preferable examples among these include titanium alkoxylates and titanium chelates because they have good affinity with the inorganic oxide particles (B).

Specific examples thereof include tetraisopropyl titanate, titanium isopropoxy octylene glycolate, diisopropoxy·bis(acetylacetonato)titanium, diisopropoxy titanium diisostearate, tetraisopropyl bis(dioctylphosphite)titanate, isopropyl tri(n-aminoethyl-aminoethyl)titanate, and tetra(2,2-diallyloxymethyl-1-butyl)bis(di-tridecyl)phosphite titanate.

The organosilane compound may be of a high molecular weight type or a low molecular weight type. Examples thereof include alkoxysilanes such as monoalkoxysilanes, dialkoxysilanes, trialkoxysilanes, and tetraalkoxysilanes. Also, vinylsilane, epoxysilane, aminosilane, methacryloxysilane, mercaptosilane may suitably be used.

An alkoxysilane can be hydrolyzed to much more improve the volume resistivity (improve the electric insulation properties), which is one effect of surface treatment.

Examples of the organozirconium compounds include alkoxy zirconium compounds and zirconium chelates.

Examples of the organoaluminum compounds include alkoxy aluminum compounds and aluminum chelates.

Examples of the organophosphorus compounds include phosphorous acid esters, phosphoric acid esters, and phosphoric acid chelates.

The "surfactant" as an affinity improver may be of a high molecular weight type or a low molecular weight type. Examples thereof include nonionic surfactants, anionic surfactants, and cationic surfactants. Preferred are high molecular weight surfactants because they have good heat stability.

Examples of the nonionic surfactants include polyether derivatives, polyvinylpyrrolidone derivatives, and alcohol derivatives. Preferred among these are polyether derivatives because they have good affinity with the inorganic oxide particles (B).

Examples of the anionic surfactants include sulfonic acid and carboxylic acid, and polymers containing a salt of such an acid. Preferable examples thereof include acrylic acid derivative-based polymers and methacrylic acid derivative-based polymers because they have good affinity with the copolymer (A).

Examples of the cationic surfactant include aminebased compounds and nitrogen-containing heterocyclic compounds such as imidazoline, and halogenated salts thereof.

The "epoxy-containing compound" as an affinity improver may be a low molecular weight compound or a high molecular weight compound. Examples thereof include epoxy compounds and glycidyl compounds. Preferred are low molecular weight compounds having one epoxy group because they have good affinity with the copolymer (A).

Preferable examples of the epoxy-containing compounds include a compound represented by the formula: 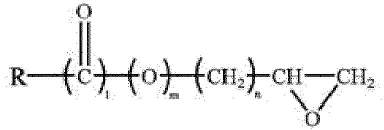 wherein R represents a hydrogen atom, a methyl group, a C2-C10 hydrocarbon group which may optionally include an oxygen atom or a nitrogen atom, or an optionally substituted aromatic ring; 1 is 0 or 1; m is 0 or 1; and n is an integer of 0 to 10. This is because such a compound is particularly excellent in affinity with the copolymer (A) .

Specific examples thereof include the compounds represented by the following formulas: 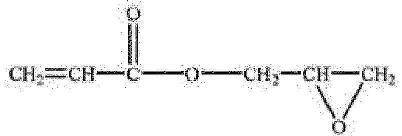 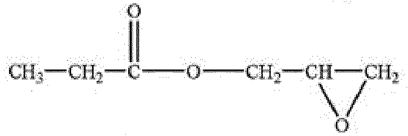 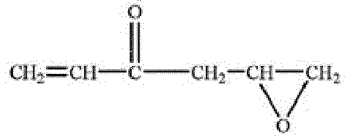 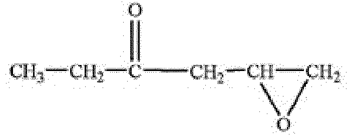 each having a ketone group or an ester group.

The affinity improver can be used in an amount which does not deteriorate the effects of the present invention. Specifically, in order to achieve uniform dispersion of the particles and a high dielectric constant of the resulting film, the amount of the affinity improver is preferably 0.01 to 30 parts by mass, more preferably 0.1 to 25 parts by mass, and still more preferably 1 to 20 parts by mass for 100 parts by mass of the inorganic oxide particles (B).

The high dielectric film of the present invention may further contain other additives in amounts which do not deteriorate the effects of the present invention.

The thickness of the high dielectric film of the present invention depends on the use of the film and it is 0.01 to 50 µm, and preferably 0.1 to 30 µm.

In the case of a hydrophobic dielectric film for electrowetting devices, the thickness is preferably 15 µm or smaller, more preferably 10 µm or smaller, still more preferably 5 µm or smaller, and particularly preferably 2 µm or smaller so as to lower a voltage required for driving a conductive liquid. The high dielectric film of the present invention is preferably thin. Still, in order to maintain the mechanical strength, the lower limit of the thickness is typically about 10 nm.

The dielectric constant (measurement conditions: 30°C, 1 kHz or 10 kHz) of the high dielectric film of the present invention is preferably 10 or higher, more preferably 11 or higher, and still more preferably 12 or higher.

The dielectric constant measured at 90°C also preferably satisfies the above range.

The high dielectric film of the present invention may be a self-supporting film or may be a coated film.

### (Method of producing high dielectric film)

In the VdF/TFE copolymer disclosed in the examples of Patent Literature 2, the ratio of VdF is low and the ratio of TFE is high, so that the resulting film naturally has a β-crystal structure. As the ratio of VdF increases, the film is more likely to have an α-crystal structure. The present inventors have found that a high dielectric film produced by a casting technique in very restricted conditions can have a β-crystal structure at a high ratio even when a VdF/TFE copolymer with a high VdF ratio is used as a material. In other words, the high dielectric film of the present invention can be produced by the following novel casting technique.

The high dielectric film of the present invention can be produced by a method including:
(1) preparing a liquid composition by dissolving or dispersing a copolymer (A) and, if necessary, inorganic oxide particles (B) and an affinity improver in a solvent,
(2) forming a film by applying the liquid composition to a substrate and drying the composition at a temperature higher than the melting point of the copolymer (A), and
(3) optionally peeling the film off the substrate.

With a drying temperature higher than the melting point of the copolymer (A) in the above production method utilizing a casting technique, a high dielectric film including 50% or more of the β-crystal structure can be produced even from a copolymer containing much VdF and less TFE as a material. The drying temperature is more preferably 10°C or more higher than the melting point of the copolymer (A).

Specifically, the drying temperature is preferably 160°C or higher, more preferably 170°C or higher, and particularly preferably 175°C or higher, for example. The upper limit of the drying temperature preferably falls within a range that causes no creases due to melting or heat shrinkage of a film, and may be 200°C, for example.

In order to easily provide a high dielectric film including 50% by mass or more of the β-crystal structure, the drying time in the casting production method is preferably 0.75 to 4/3 minutes, and more preferably 1 to 4/3 minutes.

The drying can be achieved by passing the film through a drying furnace. With a drying furnace whose total length is 10 m (e.g., 2 m × 5 pieces), for example, the drying can be achieved by passing the film through the drying furnace at a rate of 7.5 to 10 m/min.

The casting production method is preferably performed in a cleanroom, and more preferably in a class 1000 or better (e.g. class 500, class 100, class 10, or class 1) cleanroom in conformity with FED-STD-209D (Federal Specifications and Standards).

The solvent may be any one which allows the copolymer (A) to be uniformly dissolved or dispersed therein. In particular, a polar organic solvent is preferred. Preferable examples of the polar organic solvent include ketone solvents, ester solvents, carbonate solvents, cyclic ether solvents, and amide solvents. Preferable specific examples thereof include methyl ethyl ketone, methyl isobutyl ketone (MIBK), acetone, diethyl ketone, dipropyl ketone, ethyl acetate, methyl acetate, propyl acetate, butyl acetate, ethyl lactate, dimethyl carbonate, diethyl carbonate, dipropyl carbonate, methyl ethyl carbonate, tetrahydrofuran, methyl tetrahydrofuran, dioxane, dimethyl formamide (DMF), and dimethyl acetamide.

Examples of a method of applying a liquid composition to a substrate include knife coating, cast coating, roll coating, gravure coating, blade coating, rod coating, air doctor coating, and slot die coating. Preferred is gravure coating or slot die coating because such coating are easy to perform, cause less variations in thickness, and is excellent in productivity.

Such coating techniques can provide a very thin high dielectric film.

The high dielectric film of the present invention has a high dielectric constant and a low dissipation factor. The film thus enables driving of a conductive liquid at a low voltage, so that it can suitably be used for electrowetting devices in optical elements, display devices, varifocal lenses, optical modulators, optical pickups, optical recording and regenerating devices, developing devices, drop operating devices, and analytical equipment (e.g., chemical, biochemical, or biological analytical equipment which requires removal of a minute conductive liquid for analysis of a sample). Since the high dielectric film of the present invention is flexible, it can suitably be used for the aforementioned various applications.

Since the high dielectric film of the present invention has a high dielectric constant and a low dissipation factor, it can suitably be used as a film for film capacitors. In addition, since its high dielectricity, which is a characteristic of a vinylidene fluoride-based resin, does not deteriorate even after long term application of a voltage, the high dielectric film is advantageous as a film for film capacitors.

When the high dielectric film of the present invention is used as a hydrophobic dielectric film in an electrowetting device, an electric charge applied to the surface of the film changes the wettability of the surface, driving the conductive liquid in contact with the surface. When an electric charge is applied to the surface of the high dielectric film of the present invention, the electric charge is stored on the surface. The Coulomb force of this electric charge then drives the liquid in a short distance.

Examples of the conductive liquid include, but are not limited to, water and aqueous solutions containing an electrolyte (e.g. potassium chloride, sodium chloride). A conductive liquid is typically a polar liquid.

The phrase "driving the conductive liquid" herein means transferring the conductive liquid and transforming the conductive liquid.

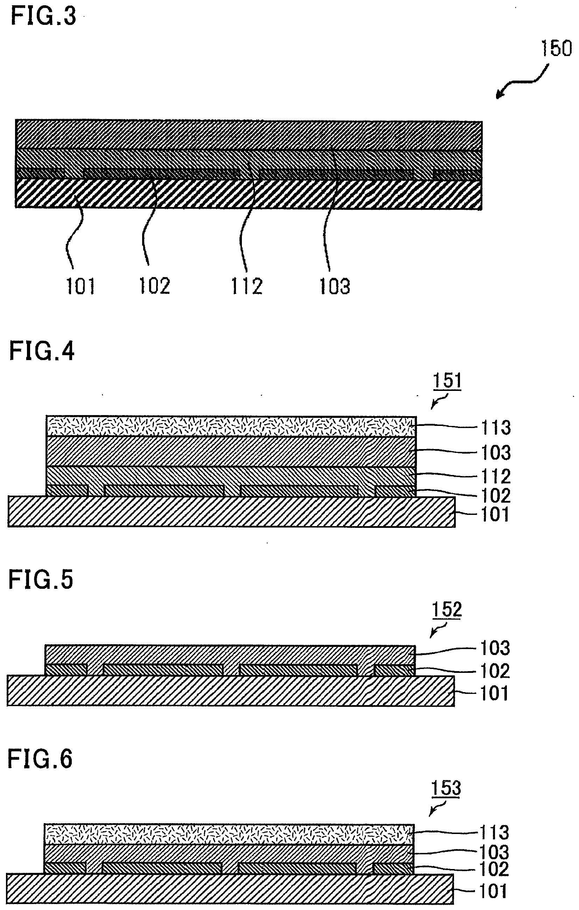

In order to use the high dielectric film of the present invention for the aforementioned electrowetting devices, for example, a laminate may be prepared which comprises a substrate, an electrode disposed on at least part of the substrate, a high dielectric inorganic layer disposed on the substrate such that it covers the electrode, and the high dielectric film of the present invention disposed on the high dielectric inorganic layer (for example, see Fig. 3).

The laminate may further comprise a water-repellent layer on the high dielectric film of the present invention (for example, see Fig. 4). The water-repellent layer can improve the water repellency of the laminate surface, enabling effective driving of the conductive liquid.

When the electrode is formed on one entire surface of the substrate, this electrode is disposed between the substrate and the high dielectric inorganic layer.

The laminate may comprise no high dielectric inorganic layer. For example, a laminate may comprise a substrate, an electrode disposed on at least part of the substrate, and the high dielectric film of the present invention disposed on the substrate such that it covers the electrode (for example, see Fig. 5).

This laminate may further comprise a water-repellent layer on the high dielectric film of the present invention (for example, see Fig. 6).

The laminate may comprise high dielectric film of the present invention and one or more water-repellent layers.

For example, a laminate may comprise
a substrate,
an electrode disposed on at least part of the substrate, and
a layered structure with three or more layers comprising one or more high dielectric films of the present invention and one or more water-repellent layers, the layered structure being disposed on the substrate such that it covers the electrode.

The layered structure may further comprise one or more high dielectric inorganic layers.

The substrate may comprise an optically transparent insulating material such as glass or transparent resin. Still, the material may be any one capable of carrying an electrode thereon. Examples of the transparent resin include polyethylene terephthalate (PET) resin, polycarbonate (PC) resin, polyimide (PI) resin, poly(methyl methacrylate) (PMMA), and polystyrene resin.

The substrate may have any thickness, and the thickness may be, for example, 1 µm to 100 mm.

The electrode may comprise a transparent conductive material such as indium oxide (In₂O₃) , tin dioxide (SnO₂), or indium tin oxide (ITO), which is a mixture of In₂O₃ and SnO₂. The electrode may be an In₂O₃ film, a SnO₂ film, or an ITO film doped with tin (Sn), antimony (Sb), or fluorine (F) .

The electrode may also comprise magnesium oxide (MgO) or zinc oxide (ZnO), for example. The electrode may also be an AZO film (an aluminum-doped (Al-doped) ZnO film), a GZO film (a gallium-doped (Ga-doped) ZnO film), or an indium-doped ZnO film.

The electrode may also comprise any transparent organic conductive material selected from conductive polymers such as thiophene conductive polymers, polyaniline, and polypyrrole; or any metal material such as aluminum, copper, chromium, nickel, zinc, stainless steel, gold, silver, platinum, tantalum, titanium, niobium, and molybdenum.

The high dielectric inorganic layer preferably has not only high insulation properties but also a high dielectric constant. For example, preferably, the insulation properties and the dielectric constant of the high dielectric inorganic layer are substantially equal to those of the high dielectric film of the present invention. The existence of this high dielectric inorganic layer can improve the electric insulation properties and the voltage resistance of the laminate.

The high dielectric inorganic layer may comprise an inorganic insulating coating material containing silica. Examples of such an inorganic insulating coating material include commercially available inorganic coating materials (e.g., AT-201 (trade name), Nissan Chemical Industries, Ltd.).

In order to achieve high electric insulation properties and high voltage resistance, the high dielectric inorganic layer preferably has a volume resistivity of 10¹³ Ω·cm or higher, more preferably 10¹⁴ Ω·cm or higher, and still more preferably 10¹⁵ Ω·cm or higher.

In order to achieve good improvement in insulation properties and voltage resistance, the lower limit of the thickness of the high dielectric inorganic layer is preferably 0.5 µm, more preferably 1 µm, and still more preferably 2 µm. In order to maintain high dielectricity, the upper limit thereof is preferably 5 µm, and more preferably 3 µm.

The water-repellent layer comprises an insulator. Examples of the material constituting the water-repellent layer include polyparaxylylene and the following fluoropolymers.

The water-repellent layer can be formed by a method of producing a polyparaxylylene film by chemical vapor deposition (CVD), or a method of coating a high dielectric film with a material which is a fluoropolymer, selected from fluoroalkyl polymers, polytetrafluoroethylene (PTFE), AF1600 (Du Pont), CYTOP (ASAHI GLASS CO., LTD.), OPTOOL DSX (DAIKIN INDUSTRIES, Ltd. ).

The water-repellent layer may have any thickness, and it is preferably thinner than the high dielectric film of the present invention. For example, the water-repellent layer is preferably 10 µm or smaller in thickness. The lower limit of the thickness of the water-repellent layer may be 0.01 nm, or may be 0.1 nm, for example.

Such a laminate can be produced as follows, for example.

An electrode is formed on a substrate like the aforementioned one by sputtering or vapor deposition. Next, a solution of an inorganic insulating coating material is applied to the main surface of the substrate by, for example, spin coating so as to cover the electrode, and then the coated material is fired to provide a high dielectric inorganic layer. Next, the high dielectric film of the present invention is formed on the high dielectric inorganic layer by, for example, the casting technique described above in the method of producing a high dielectric film. Thereby, a laminate is produced.

### Electrowetting device

The high dielectric film of the present invention can suitably be used as a film for electrowetting devices.

Thus, a further embodiment of the present invention refers to an electrowetting device comprising
(i) a first electrode,
(ii) a second electrode,
(iii) a conductive liquid 106 contained between the first electrode and the second electrode, the conductive liquid being traversable therebetween and
(iv) the high dielectric film of the present invention which is disposed between the first electrode and the conductive liquid, and which insulates the first electrode from the second electrode, or comprising
(v) a cylindrical insulator 703 comprising the film according to the invention,
(vi) a ring-shaped first electrode 702 disposed on the exterior of the cylindrical insulator 703,
(vii) a second electrode 707 disposed opposite to the ring-shaped first electrode 702 across the cylindrical insulator 703, and
(viii) a conductive liquid 706 contained inside the cylindrical insulator 703 and being traversable therein.

When a predetermined voltage is applied between the first electrode and the second electrode in the first electrowetting device of the present invention, an electric field is applied to the surface of the high dielectric film. This enables driving of the conductive liquid as mentioned hereinabove with respect to the high dielectric film of the present invention.

The conductive liquid is a liquid material having polarity, and examples thereof include water and aqueous solutions containing an electrolyte (e.g., potassium chloride, sodium chloride).

Preferably, the conductive liquid is the same as one mentioned hereinabove with respect to the high dielectric film of the present invention and has low viscosity.

The first electrode and the second electrode can be the same as the respective electrodes mentioned hereinabove with respect to the laminate.

The electrowetting device of the present invention can suitably be applied to optical elements, display devices, varifocal lenses, optical modulators, optical pickups, optical recording and regenerating devices, developing devices, drop operating devices, stroboscopic devices, and analytical equipment (e.g., chemical, biochemical, or biological analyzers which require the movement of minute conductive liquid for sample analysis).

The following will describe an optical element which is one embodiment of the electrowetting device of the present invention referring to the drawings. For the sake of clarity, the drawings are not to scale. The following constituent features are not necessarily the essential constituent features of the present invention. In the drawings, the same reference numeral indicates the same component unless otherwise mentioned.

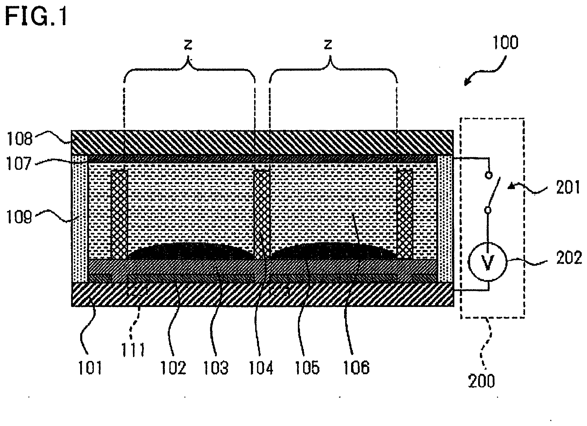

Fig. 1 is a cross-sectional view for illustrating the structure of an optical element 100 which is one embodiment of the first electrowetting device of the present invention. The optical element 100 of Fig. 1 has two cell regions z. The optical element may have any number of cell regions z in the right and left direction and in the forward and backward direction of Fig. 1. For example, the number of cell regions z may be one.

The optical element 100 comprises a first substrate 101, a first electrode 102, a high dielectric film 103, partitions 104, hydrophobic liquids 105, a conductive liquid 106, a second electrode 107, a second substrate 108, and side walls 109. A control unit 200 comprises a switch 201 and a power source 202.

The first substrate 101 and the second substrate 108 are supported by the side walls 109 so as to be opposite to each other.

The first substrate 101 and the second substrate 108 each comprise the material mentioned hereinabove with respect to the substrate of the laminate.

The first substrate 101 is provided with a drive element 111 and a signal line (e.g., electric wire, not illustrated) for each cell region z. The signal line is configured to transmit a signal which is emitted from the control unit 200 and which enables individual driving of the drive element 111 (e.g., a thin film transistor).

The first electrode 102 is divided into multiple parts, insulated from each other, and each of the electrode part is disposed in correspondence to each cell region z, so that a voltage can individually be applied to each cell region z. Each part of the first electrode 102 is connected with the corresponding drive element 111.

The first electrode 102 and the second electrode 107 each comprise the aforementioned material.

The high dielectric film 103 is the high dielectric film of the present invention described above.

The partitions 104 are members defining the cell regions z, which are unit regions where light passes. They are vertically disposed on the high dielectric film 103.

The material of the partitions 104 needs not to dissolve in and not to react with the hydrophobic liquid 105 or the conductive liquid 106. Examples of such a material include polymeric materials such as acrylic resin and epoxy resin.

The surface of each partition 104 may be subjected to hydrophilization so as to show the affinity with the conductive liquid 106. The hydrophilization may be achieved by any known method such as ultraviolet irradiation, oxygen plasma irradiation, and laser irradiation.

Each cell region z defined by the partitions 104 contains the hydrophobic liquid 105. In other words, the partitions 104 prevent the hydrophobic liquid 105 from moving (flowing out) to the adjacent cell regions z. The hydrophobic liquid 105 in each cell region z is preferably in an amount enough to cover the whole surface of the high dielectric film 103 in the cell region z when no electric field is applied to the surface of the high dielectric film 103.

The hydrophobic liquid 105 contains a hydrophobic organic solvent as a medium. Examples of the hydrophobic organic solvent include C6-C35 hydrocarbons such as hexane, octane, decane, dodecane, hexadecane, undecane, benzene, toluene, xylene, mesitylene, butyl benzene, and 1,1-diphenyl ethylene; and silicone oils.

These hydrophobic organic solvents may be used alone or in combination.

The hydrophobic liquid 105 contains a pigment or a dye which absorbs light with a predetermined wavelength (e.g., visible light). The pigment or dye is dispersed or dissolved in the medium.

Examples of the pigment include titanium oxide, iron oxide, carbon black, azo pigments (e.g., azo lake), and polycyclic pigments (e.g., phthalocyanine pigments, perylene pigments, perinone pigments, anthrachinon pigments, quinacridone pigments, isoindolinone pigments, quinophthalone pigments). Preferably, the pigment is highly dispersible in the hydrophobic liquid 105.

Examples of the dye include Oil Blue N (Aldrich). Preferably, the dye is highly soluble in the hydrophobic liquid 105.

Preferably, the hydrophobic liquid 105 has low viscosity and is non-miscible with the conductive liquid 106.

The hydrophobic liquid 105 is usually a nonpolar liquid. The hydrophobic liquid 105 is also usually nonconductive liquid.

The conductive liquid 106 is contained between the high dielectric film 103 and the second electrode 107. The hydrophobic liquid 105 and the conductive liquid 106 are separated from each other to form two layers. The space between the high dielectric film 103 and the second electrode 107 is preferably filled with the hydrophobic liquid 105 and the conductive liquid 106. Even in this case, the conductive liquid 106 is movable because the hydrophobic liquid 105 is a fluid.

The conductive liquid 106 is a transparent liquid material having polarity, and examples thereof include water and aqueous solutions containing an electrolyte (e.g., potassium chloride, sodium chloride).

Preferably, the conductive liquid 106 has low viscosity and is non-miscible with the hydrophobic liquid 105.

The side walls 109 are sealing materials which seal the hydrophobic liquid 105 and the conductive liquid 106 together with the first substrate 101 and the second substrate 108. Examples of the material constituting the side walls 109 include silicone.

The control unit 200 controls the driving of the optical element 100.

The control unit 200 comprises a switch 201 and a power source 202.

One terminal of the switch 201 is connected with the second electrode 107 by a conductor, and the other terminal thereof is connected with the first electrode 102 through the power source 202 and the drive element 111 by a conductor.

The state of the switch 201 can be selected from the two states, in other words, the ON state in which the terminals are electrically connected with each other and the OFF state in which the terminals are electrically insulated from each other.

The power source 202 is preferably capable of changing the voltage magnitude and keeping the voltage constant.

Thus, the control unit 200 can apply a certain voltage between the first electrode 102 and the second electrode 107 by operating the switch 201 and controlling the voltage of the power source 202. A cell region z to be supplied with a predetermined voltage can be selected by selecting the drive element 111 via a gate driver (not illustrated).

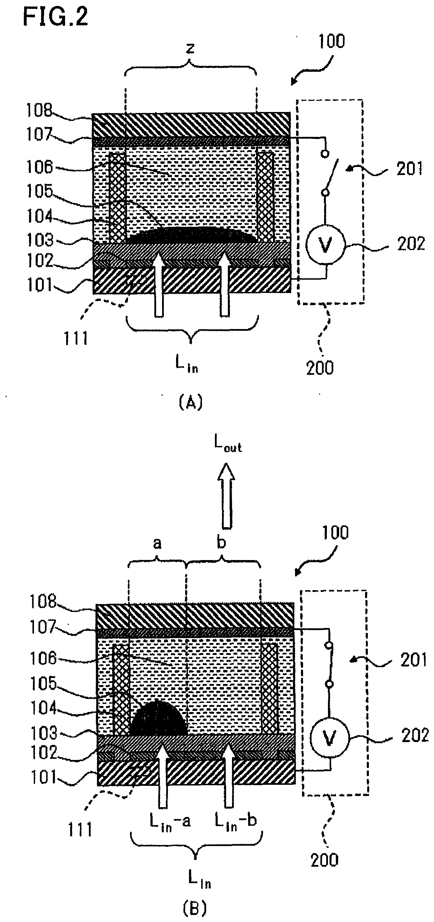

Next, the behavior of the optical element 100 with the aforementioned structure will be described referring to Fig. 2. Fig. 2 is a schematic diagram illustrating the behavior of the optical element illustrated in Fig. 1, which shows an enlarged cell region z of the optical element 100.

When the switch 201 is turned off in the control unit 200 and no voltage is applied between the first electrode 102 and the second electrode 107, the hydrophobic liquid 105 colored with a pigment or a dye spreads to cover the entire cell region z, as shown in Fig. 2(A). Thereby, if the hydrophobic liquid 105 absorbs the entire range of the visible light wavelength, the light Lᵢₙ incident on a certain cell region z from the side of the first substrate 101 in Fig. 2(A) is blocked by the hydrophobic liquid 105, failing to pass through the cell region z. When the switch 201 is turned on in the control unit 200 and a voltage is applied between the first electrode 102 and the second electrode 107, as shown in Fig. 2(B), the conductive liquid 106 is in contact with the high dielectric film 103 at a partial region (region b) of the cell region z, while the hydrophobic liquid 105 gathers at the other partial region (region-a) of the cell region z. Thus, the light component Lᵢₙ₋ₐ incident on the region-a among the components of the light Lᵢₙ incident on a certain cell region z from the side of the first substrate 101 is blocked by the hydrophobic liquid 105, but the remaining light component L_{in-b} incident on the region b passes through the region as a transmitted light Lout.

Fig. 3 shows one specific example of a laminate comprising the high dielectric film of the present invention.

A laminate 150 comprises
a first substrate 101,
a first electrode 102 disposed on at least part of the first substrate 101,
a high dielectric inorganic layer 112 which is disposed on the first substrate 101 and which covers the first electrode 102, and
a high dielectric film 103 disposed on the high dielectric inorganic layer 112.

The high dielectric inorganic layer 112 comprises the aforementioned material.

The first substrate 101, the first electrode 102, and the high dielectric film 103 are the same as those shown in Fig. 1.

Such a laminate 150 can take the place of the part consisting of the first substrate 101, the first electrode 102, and the high dielectric film 103 in the optical element 100 shown in Fig. 1.

Fig. 4 shows another specific example of a laminate comprising the high dielectric film of the present invention.

A laminate 151 comprises
a first substrate 101,
a first electrode 102 disposed on at least part of the first substrate 101,
a high dielectric inorganic layer 112 which is disposed on the first substrate 101 and which covers the first electrode 102,
a high dielectric film 103 disposed on the high dielectric inorganic layer 112, and
a water-repellent layer 113 disposed on the high dielectric film 103.

The high dielectric inorganic layer 112 and the water-repellent layer 113 comprise the aforementioned materials.

The first substrate 101, the first electrode 102, and the high dielectric film 103 are the same as those shown in Fig. 1.

Such a laminate 151 can take the place of the part consisting of the first substrate 101, the first electrode 102, and the high dielectric film 103 in the optical element 100 shown in Fig. 1.

Fig. 5 shows still another specific example of a laminate comprising the high dielectric film of the present invention.

A laminate 152 comprises
a first substrate 101,
a first electrode 102 disposed on at least part of the first substrate 101, and
a high dielectric film 103 which is disposed on the first substrate 101 and which covers the first electrodes 102.

The first substrate 101, the first electrode 102, and the high dielectric film 103 are the same as those shown in Fig. 1.

Such a laminate 152 can take the place of the part consisting of the first substrate 101, the first electrode 102, and the high dielectric film 103 in the optical element 100 shown in Fig. 1.

Fig. 6 shows still another specific example of a laminate comprising the high dielectric film of the present invention.

A laminate 153 comprises
a first substrate 101,
a first electrode 102 disposed on at least part of the first substrate 101,
a high dielectric film 103 which is disposed on the first substrate 101 and which covers the first electrode 102, and
a water-repellent layer 113 disposed on the high dielectric film 103.

The water-repellent layer 113 comprises the aforementioned material.

The first substrate 101, the first electrode 102, and the high dielectric film 103 are the same as those shown in Fig. 1.

Such a laminate 153 can take the place of the part consisting of the first substrate 101, the first electrode 102, and the high dielectric film 103 in the optical element 100 shown in Fig. 1.

In another embodiment the electrowetting device of the present invention comprises(v) a cylindrical insulator 703 comprising the film according to the invention,
(vi) a ring-shaped first electrode 702 disposed on the exterior of the cylindrical insulator 703,
(vii) a second electrode 707 disposed opposite to the ring-shaped first electrode 702 across the cylindrical insulator 703, and
(viii) a conductive liquid 706 contained in the cylindrical insulator 703, the conductive liquid 706 being traversable therein,

The following will describe an optical element (varifocal lens) which is one embodiment of the second electrowetting device of the present invention referring to the drawings, but the present invention is not limited to this embodiment. In order to give priority to ease of understanding, these drawings are not to scale. The following constituent features are not necessarily the essential constituent features of the present invention. In the drawings, the same reference numeral indicates the same component unless otherwise mentioned.

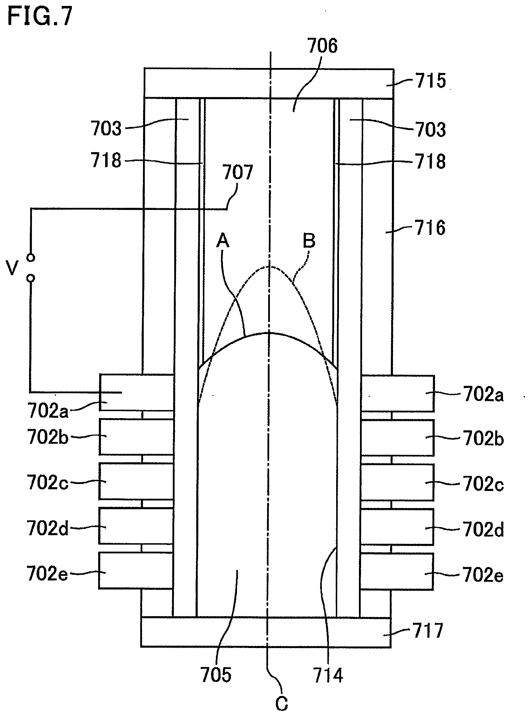

Fig. 7 is a cross-sectional view illustrating the whole structure of an optical element (varifocal lens) which is one embodiment of the second electrowetting device of the present invention.

In the present embodiment, a cylindrical side member 716, a translucent bottom member 717, and a translucent top member 715 are used as cell members.

A cylindrical insulation layer 703 is disposed on the inner surface of the side member 716, and a surface layer 718 is disposed on the insulation layer 703 at the portion overlapping the upper portion of the side member 716. Ring-shaped electrodes 702a, 702b, 702c, 702d, and 702e are disposed on the exterior of the cylindrical insulation layer 703.

A conductive liquid 706 is contained inside the cylindrical insulation layer 703, the conductive liquid being traversable therein. An electrode 707 is disposed opposite to the ring-shaped electrodes 702a, 702b, 702c, 702d, and 702e across the cylindrical insulator (inside the cylindrical insulation layer 703) and is in contact with the conductive liquid 706.

One terminal of a power source V is connected with the electrode 707 by a conductor, while the other terminal is connected with the ring-shaped electrode 702a.

A hydrophobic liquid 705 is contained inside the cylindrical insulation layer 703, the hydrophobic liquid being traversable therein. The hydrophobic liquid 705 is in contact with the insulation layer 703 at the portion overlapping the lower portion of the side member 716.

The surface layer 718 preferably comprises a material having higher affinity (affinity force) for the conductive liquid 706 than for the hydrophobic liquid 705.

In the present embodiment, the ring-shaped electrodes 702a, 702b, 702c, 702d, and 702e, which are axially symmetric around the optical axis C, are disposed at different heights outside the insulation layer 703. In Fig. 7, the voltage supply V is connected only with the electrode 702a, but may appropriately be connected with any of the other electrodes 702b, 702c, 702d, and 702e so that the supply V can apply a voltage to a desired ring-shaped electrode. As the voltage values applied to the ring-shaped electrodes are decreased in the order of the electrodes 702b, 702c, 702d, and 702e and the values are continuously changed, the state of the hydrophobic liquid 705 can continuously be changed from the state A to the state B.

The cylindrical insulation layer 703 comprises the high dielectric film of the present invention, and may comprise the aforementioned high dielectric inorganic layer and water-repellent layer.

For example, the cylindrical insulation layer 703 may consist only of the high dielectric film of the present invention, may be a laminate comprising a high dielectric inorganic layer and the high dielectric film of the present invention disposed on the high dielectric inorganic layer, or may further comprise a water-repellent layer disposed on the high dielectric film of the present invention. Further, the cylindrical insulation layer 703 may be a laminate comprising the high dielectric film of the present invention and a water-repellent layer disposed on the high dielectric film.

The laminate may comprise one or more high dielectric inorganic layers, one or more high dielectric films of the present invention, and one or more water-repellent layers.

The conductive liquid, the hydrophobic liquid, the high dielectric inorganic layer, the water-repellent layer, the electrodes, and other components can be the same as those mentioned hereinabove with respect to the first electrowetting device of the present invention.

### EXAMPLES

The present invention will be described in detail below referring to, but not limited to, examples.

The parameters used herein were determined as follows.

### (Thickness)

The thickness of the film was measured using a digital length measuring system (MF-1001, Nikon Corp.).

### (Dissipation factor and dielectric constant)

Aluminum was deposited in vacuo on each surface of the film, thereby preparing a sample. The capacitance and the dissipation factor of this sample were measured using an LCR meter (ZM2353, NF Corp.) at 30°C and 90°C and at a frequency of 1 kHz or 10 kHz under dry air atmosphere. The dielectric constant was calculated from the film thickness and the capacitance.

### (Volume resistivity)

The volume resistivity (Ω·cm) was determined using a digital ultra megohmmeter/pico-ammeter at 90°C and at 300 V DC in dry air atmosphere.

### (Voltage resistance)

The voltage resistance of the film disposed on a substrate was determined using a hipot and insulation resistance tester (TOS9201, KIKUSUI ELECTRONICS CORP.) under dry air atmosphere. The measurement was performed at a voltage-increasing rate of 100 V/s.

### (Melting point)

A heat-of-fusion curve was drawn using a differential scanning calorimetry (DSC) device at a temperature-increasing rate of 10°C/min, and the temperature corresponding to the local maximum of this curve was defined as the melting point.

### (Average primary particle size of inorganic oxide particles)

The average primary particle size of the inorganic oxide particles was determined using a laser diffraction/scattering particle size distribution analyzer (trade name: LA-920, HORIBA, Ltd.).

### (Composition of fluoropolymer)

The fluoropolymer was subjected to a F-NMR measurement using a nuclear magnetic resonance device (type: VNS400MHz, manufacturer: Varian (the present Agilent Technologies Inc.), providing the spectrum. Based on the integral values of the respective peaks and the following formulas, the compositional ratio was determined.

### - Formulas

$VdF : A + B - D$ $TFE : C / \left(2+D\right)$ $VdF \left(mol%\right) = 100 \times \left\{VdF/\left(VdF+TFE\right)\right\}$ $TFE \left(mol%\right) = 100 \times \left\{TFE/\left(VdF+TFE\right)\right\}$
A: integral value of peak from -90 to -98 ppm
B: integral value of peak from -110 to -118 ppm
C: integral value of peak from -119 to -124.5 ppm
D: integral value of peak from -124.5 to -127 ppm

### (Ratio of β-crystal structure)

The ratio of the β-crystal structure was determined as follows. Specifically, the absorbance of the absorption peak (839 cm⁻¹) assigned to the β-crystal and the absorbance of the absorption peak (763 cm⁻¹) assigned to the α-crystal were determined using a Fourier transform infrared (FT-IR) spectrophotometer (trade name: spectrum One, Perkin Elmer Inc.). The ratios of the respective absorbances were defined as the ratios of the respective crystallinities. Then, the ratio of the β-crystal structure was calculated from the following formulas.

More specifically, the ratio is a value calculated on the basis of the results of the FT-IR measurement and the following formulas. $F \left(β\right) = {X}_{β} / \left({X}_{α}+{X}_{β}\right) = {A}_{β} / \left(1.26{A}_{α}+{A}_{β}\right)$
F(β): ratio of β-crystal structure
X_{α}: crystallinity of α-crystal
X_{β}: crystallinity of β-crystal
A_{α}: absorbance at 763 cm⁻¹
A_{β}: absorbance at 839 cm⁻¹
K_{β/}K_{α} = 1.26 (ratio between absorption coefficient of β-crystal (839 cm⁻¹) and absorption coefficient of α-crystal (763 cm⁻¹))

### (Total light transmittance)

The total light transmittance was determined using HAZE-GARD II (trade name, Toyo Seiki Seisaku-sho, Ltd.) in conformity with ASTM D1003.

### (Haze value (total haze value, external haze value, internal haze value))

The total haze value was measured using HAZE-GARD II (trade name, Toyo Seiki Seisaku-sho, Ltd.) in conformity with ASTM D1003.

The internal haze value was measured in the same manner as in the measurement of the total haze value except that the film is put into water contained in a glass cell. The external haze value was calculated by subtracting the internal haze value from the total haze value of the film.

### (Coefficient of variation of thickness)

The rate of change in electromechanical coupling coefficient (kt value) was defined as the coefficient of variation of thickness of the film.

The electromechanical coupling coefficient (kt value) was calculated as follows. Specifically, an Al-deposited electrode was formed on each surface of a piezoelectric film. A 13-mm-diameter disc was cut out of a predetermined part of the piezoelectric film, and the kt value of this disc was determined using an impedance analyzer (4194A, Hewlett-Packard Co.) by the method of H. Ohigashi et al., "The application of ferroelectric polymer, Ultrasonic transducers in the megahertz range".

The rate of change in electromechanical coupling coefficient (rate of change in kt value) was determined by:
(1) measuring the electromechanical coupling coefficient (kt before heating) of the piezoelectric film,
(2) heating the piezoelectric film in the air at 120°C for 10 hours,
(3) still-standing the piezoelectric film at room temperature to cool the film down to room temperature, and
(4) measuring the electromechanical coupling coefficient (kt after heating) of the piezoelectric film after the heating and cooling, and
finally substituting the determined " kt before heating " and "kt after heating " into the following formula. $\begin{matrix}Rate of change in electromechanical coupling \\ coefficient \left(%\right) = \left\{\left(kt after heating\right)-\left(\begin{matrix}kt before \\ heating\end{matrix}\right)/\left(kt before heating\right)\right\} \times 100\end{matrix}$

### Synthesis Example 1 (Production of VdF/TFE copolymer (a1))

A 4-L-capacity autoclave was charged with 1.3 kg of pure water, and sufficiently purged with nitrogen. Then, 1.3 g of octafluorocyclobutane was put thereinto, and the inside of the system was maintained at a temperature of 37°C and at a stirring rate of 580 rpm. Thereafter, 200 g of a gas mixture of tetrafluoroethylene (TFE)/1,1-difluoroethylene (vinylidene fluoride, VdF) (= 7/93 mol%) and 1 g of ethyl acetate were put into the autoclave. Further, 1 g of a 50% by mass solution of di-n-propyl peroxydicarbonate in methanol was added thereto, initiating the polymerization. Since the pressure in the system decreased in response to the progress of the polymerization, a gas mixture of tetrafluoroethylene/1,1-difluoroethylene (= 7/93 mol%) was continually supplied to the reaction system so as to maintain the pressure in the system at 1.3 MPaG. The stirring was continued for 20 hours. The pressure was then released to atmospheric pressure, and the reaction product was washed with water and dried, thereby providing 130 g of white powder of fluoropolymer.

### Synthesis Example 2 (Production of VdF/TFE copolymer (a2))

A 4-L-capacity autoclave was charged with 1.3 kg of pure water, and sufficiently purged with nitrogen. Then, 1.3 g of octafluorocyclobutane was put thereinto, and the inside of the system was maintained at a temperature of 37°C and at a stirring rate of 580 rpm. Thereafter, 200 g of a gas mixture of tetrafluoroethylene (TFE)/1,1-difluoroethylene (vinylidene fluoride, VdF) (= 20/80 mol%) and 1 g of ethyl acetate were put into the autoclave. Further, 1 g of a 50% by mass solution of di-n-propyl peroxydicarbonate in methanol was added thereto, initiating the polymerization. Since the pressure in the system decreased in response to the progress of the polymerization, a gas mixture of tetrafluoroethylene/1,1-difluoroethylene (= 20/80 mol%) was continually supplied to the reaction system so as to maintain the pressure in the system at 1.3 MPaG. The stirring was continued for 20 hours. The pressure was then released to atmospheric pressure, and the reaction product was washed with water and dried, thereby providing 140 g of white powder of fluoropolymer.

### Synthesis Example 3 (Production of VdF/TFE copolymer (a3))

A 4-L-capacity autoclave was charged with 1.3 kg of pure water, and sufficiently purged with nitrogen. Then, 1.3 g of octafluorocyclobutane was put thereinto, and the inside of the system was maintained at a temperature of 37°C and at a stirring rate of 580 rpm. Thereafter, 200 g of a gas mixture of tetrafluoroethylene (TFE)/1,1-difluoroethylene (vinylidene fluoride, VdF) (= 18/82 mol%) and 1 g of ethyl acetate were put into the autoclave. Further, 1 g of a 50% by mass solution of di-n-propyl peroxydicarbonate in methanol was added thereto, initiating the polymerization. Since the pressure in the system decreased in response to the progress of the polymerization, a gas mixture of tetrafluoroethylene/1,1-difluoroethylene (= 18/82 mol%) was continually supplied to the reaction system so as to maintain the pressure in the system at 1.3 MPaG. The stirring was continued for 20 hours. The pressure was then released to atmospheric pressure, and the reaction product was washed with water and dried, thereby providing 140 g of white powder of fluoropolymer.

### Example 1

A 2L tank was charged with 560 parts by mass of methyl ethyl ketone (MEK) (KISHIDA CHEMICAL Co., Ltd.), 240 parts by mass of N-methyl-2-pyrrolidone (NMP) (NIPPON REFINE Co., Ltd.), and 200 parts by mass of the VdF/TFE copolymer (a1) (VdF/TFE = 93/7, melting point = 150°C) produced in Synthesis Example 1. The components were stirred with a stirrer, thereby providing a 20 w/w% fluororesin solution.

This fluororesin solution was casted on a polyethylene terephthalate (PET) film, which was a 38-µm-thick release-treated nonporous polyester film, using a gravure coater in a class 1000 cleanroom. The workpiece was dried through drying furnaces (2 m each, 10 m in total) at 80°C, 120°C, 175°C, 175°C, and 175°C at a rate of 7.5 m/min for 1.3 minutes, thereby providing a laminate film including a PET film and a fluororesin film. Then, the fluororesin film was peeled off the PET film, providing a 4.1-µm-thick film. For the resulting film, the ratio of the α-crystal structure was 0% and the ratio of the β-crystal structure was 100%.

### Example 2

A 3-L tank was charged with 560 parts by mass of methyl ethyl ketone (MEK) (KISHIDA CHEMICAL Co., Ltd.), 240 parts by mass of N-methyl-2-pyrrolidone (NMP) (NIPPON REFINE Co., Ltd.), and 200 parts by mass of the VdF/TFE copolymer (a1) (VdF/TFE = 93/7, melting point = 150°C) produced in Synthesis Example 1. The components were stirred with a stirrer, thereby providing a 20 w/w% fluororesin solution.

To 1000 parts by mass of this fluororesin solution (concentration: 20 w/w%) was added 10 parts by mass of γ-Al₂O₃ (trade name: AKP-G15, Sumitomo Chemical Co., Ltd., average primary particle size: 100 nm). This mixture was subjected to a dispersion treatment using a bead mill (LMZ015, Ashizawa Finetech Ltd.) at a rotation rate of 12 m/s for 60 minutes, thereby providing a composition for coating.

This fluororesin solution was applied to a polyethylene terephthalate (PET) film, which was a 38-µm-thick release-treated nonporous polyester film, using a gravure coater in a class 1000 cleanroom. The workpiece was dried through drying furnaces (2 m each, 10 m in total) at 80°C, 120°C, 175°C, 175°C, and 175°C at a rate of 7.5 m/min for 1.3 minutes, thereby providing a laminate film including a PET film and a fluororesin film. Then, the fluororesin film was peeled off the PET film, providing a 4.2-µm-thick film. For the resulting film, the ratio of the α-crystal structure was 0% and the ratio of the β-crystal structure was 100%.

### Examples 3 to 6

A film was produced in the same manner as in Example 2 except that the amount of γ-Al₂O₃ was as shown in Table 1. For the film produced in Example 3, the ratio of the α-crystal structure was 0% and the ratio of the β-crystal structure was 100%. In Example 4, the ratio of the α-crystal structure was 0% and the ratio of the β-crystal structure was 100%. In Example 5, the ratio of the α-crystal structure was 0% and the ratio of the β-crystal structure was 100%. In Example 6, the ratio of the α-crystal structure was 0% and the ratio of the β-crystal structure was 100%.

### Comparative Example 1

A film was produced in the same manner as in Example 1 except that the VdF/TFE copolymer (a1) was replaced by polyvinylidene fluoride (trade name: VP825, DAIKIN INDUSTRIES, Ltd., melting point: 170°C).

### Comparative Example 2

A film was produced in the same manner as in Example 1 except that the temperatures of the respective drying furnaces were 80°C, 120°C, 140°C, 140°C, and 140°C. For the resulting film, the ratio of the α-crystal structure was 61.3% and the ratio of the β-crystal structure was 38.7%.

### Tests

For the films produced in Examples 1 to 6 and Comparative Examples 1 and 2, the data on volume resistivity, voltage resistance, dielectric constant, and dissipation factor were obtained.

Table 1 shows the results.

**[Table 1]**

| | | Example | | | | | | | | | | | | Comparative Example | | Comparative Example | |
|---|---|---|---|---|---|---|---|---|---|---|---|---|---|---|---|---|---|
| | | 1 | | 2 | | 3 | | 4 | | 5 | | 6 | | 1 | | 2 | |
| (A) Film-forming resin (parts by mass) | | | | | | | | | | | | | | | | | |
| | VdF/TFE (93/7 mol%) | 200 | | 200 | | 200 | | 200 | | 200 | | 200 | | | | 200 | |
| | PVDF (VdF 100 mol%) | | | | | | | | | | | | | 200 | | | |

| (B) Inorganic oxide particles (parts by mass) | | | | | | | | | | | | | | | | | |
|---|---|---|---|---|---|---|---|---|---|---|---|---|---|---|---|---|---|
| | γ-Al₂O₃ | - | | 10 | | 18 | | 2.0 | | 0.10 | | 500 | | - | | - | |
| | Average primary particle size (nm) | - | | 100 | | 100 | | 100 | | 100 | | 100 | | - | | - | |
| (B)/(A) (ratio by mass) | | - | | 5/100 | | 9/100 | | 1/100 | | 0.05/100 | | 250/100 | | - | | - | |

| Film properties | | | | | | | | | | | | | | | | | |
|---|---|---|---|---|---|---|---|---|---|---|---|---|---|---|---|---|---|
| | Thickness (µm) | 4.1 | | 4.2 | | 4.2 | | 4.0 | | 4.1 | | 4.3 | | 6.2 | | 4.0 | |
| | Volume resistivity (Ω·cm) | 1.4 x 10¹⁴ | | 5.1 x 10¹⁴ | | 5.8 x 10¹⁴ | | 2.5 x 10¹⁴ | | 1.9 x 10¹⁴ | | 1.0 x 10¹⁴ | | 2.5 x 10¹³ | | 1.2 x 10¹⁴ | |
| | Voltage resistance (V/µm) | 580 | | 550 | | 540 | | 570 | | 580 | | 510 | | 610 | | 570 | |

| Measurement temperature (°C) | | 30°C | 90°C | 30°C | 90°C | 30°C | 90°C | 30°C | 90°C | 30°C | 90°C | 30°C | 90°C | 30°C | 90°C | 30°C | 90°C |
|---|---|---|---|---|---|---|---|---|---|---|---|---|---|---|---|---|---|
| Dielectric constant | | | | | | | | | | | | | | | | | |
| | 1 kHz | 10.7 | 11.2 | 10.7 | 11.2 | 10.6 | 11.0 | 10.5 | 11.1 | 10.7 | 11.3 | 10.3 | 10.5 | 10.5 | 13.2 | 10.6 | 11.5 |
| | 10 kHz | 10.5 | 10.8 | 10.5 | 10.8 | 10.4 | 10.5 | 10.2 | 10.6 | 10.4 | 10.8 | 10.1 | 10.2 | 10.1 | 13.0 | 10.3 | 11.1 |

| Dissipation factor (%) | | | | | | | | | | | | | | | | | |
|---|---|---|---|---|---|---|---|---|---|---|---|---|---|---|---|---|---|
| | 1 kHz | 1.4 | 2.6 | 1.6 | 2.8 | 1.7 | 2.8 | 1.6 | 2.7 | 1.5 | 2.6 | 1.0 | 1.6 | 3.3 | 9.6 | 4.0 | 11.5 |
| | 10 kHz | 1.8 | 2.3 | 1.8 | 2.5 | 2.0 | 2.6 | 2.0 | 2.4 | 1.9 | 2.4 | 1.1 | 1.7 | 3.1 | 8.5 | 2.6 | 9.3 |

### Example 7

A film was produced in the same manner as in Example 2 except that γ-Al₂O₃ (trade name: AKP-G15, Sumitomo Chemical Co., Ltd., average primary particle size: 100 nm) was replaced by α-Al₂O₃ (trade name: AKP-30, Sumitomo Chemical Co., Ltd., average primary particle size: 300 nm) and the amount thereof was as shown in the following Table 2. For the resulting film, the ratio of the α-crystal structure was 0% and the ratio of the β-crystal structure was 100%.

### Example 8

A film was produced in the same manner as in Example 2 except that γ-Al₂O₃ (trade name: AKP-G15, Sumitomo Chemical Co., Ltd., average primary particle size: 100 nm) was replaced by MgO (trade name: 3310FY, ATR, average primary particle size: 30 nm) and the amount thereof was as shown in the following Table 2. For the resulting film, the ratio of the α-crystal structure was 0% and the ratio of the β-crystal structure was 100%.

### Example 9

A film was produced in the same manner as in Example 2 except that γ-Al₂O₃ (trade name: AKP-G15, Sumitomo Chemical Co., Ltd., average primary particle size: 100 nm) was replaced by MgO-Al₂O₃ (trade name: TSP-20, TAIMEI CHEMICALS CO., LTD., average primary particle size: 240 nm) and the amount thereof was as shown in the following Table 2. For the resulting film, the ratio of the α-crystal structure was 0% and the ratio of the β-crystal structure was 100%.

### Example 10

A film was produced in the same manner as in Example 2 except that γ-Al₂O₃ (trade name: AKP-G15, Sumitomo Chemical Co., Ltd., average primary particle size: 100 nm) was replaced by BaTiO₃ (trade name: T-BTO-50RF, TODA KOGYO CORP., average primary particle size: 50 nm) and the amount thereof was as shown in the following Table 2. For the resulting film, the ratio of the α-crystal structure was 0% and the ratio of the β-crystal structure was 100%.

### Example 11

A film was produced in the same manner as in Example 2 except that γ-Al₂O₃ (trade name: AKP-G15, Sumitomo Chemical Co., Ltd., average primary particle size: 100 nm) was replaced by 3Al₂O₃·2SiO₂ (trade name: High-Purity Mullite, KCM Corp., average primary particle size: 700 nm) and the amount thereof was as shown in the following Table 2. For the resulting film, the ratio of the α-crystal structure was 0% and the ratio of the β-crystal structure was 100%.

### Tests

For the films produced in Examples 7 to 11, the data on volume resistivity, voltage resistance, dielectric constant, and dissipation factor were obtained.

Table 2 shows the results.

**[Table 2]**

| | | Example | | | | | | | | | |
|---|---|---|---|---|---|---|---|---|---|---|---|
| | | 7 | | 8 | | 9 | | 10 | | 11 | |
| (A) Film-forming resin (parts by mass) | | | | | | | | | | | |
| | VdF/TFE (93/7 mol%) | 200 | | 200 | | 200 | | 200 | | 200 | |

| (B) Inorganic oxide particles (parts by mass) | | | | | | | | | | | |
|---|---|---|---|---|---|---|---|---|---|---|---|
| | α-Al₂O₃ | 10 | | | | | | | | | |
| | MgO | - | | 10 | | | | | | | |
| | MgO·Al₂O₃ | - | | | | 10 | | | | | |
| | BaTiO₃ | - | | | | | | 10 | | | |
| | 3Al₂O₃.2SiO₂ | - | | | | | | | | 10 | |
| | Average primary particle size (nm) | 300 | | 30 | | 240 | | 50 | | 700 | |

| (B)/(A) (ratio by mass) | | 5/100 | | 5/100 | | 5/100 | | 5/100 | | 5/100 | |
|---|---|---|---|---|---|---|---|---|---|---|---|
| Film properties | | | | | | | | | | | |
| | Thickness (µm) | 4.1 | | 4.0 | | 4.2 | | 3.9 | | 4.1 | |
| | Volume resistivity (Ω·cm) | 3.7 x 10¹⁴ | | 2.4 x 10¹⁴ | | 2.1 x 10¹⁴ | | 1.9 x 10¹⁴ | | 3.2 x 10¹⁴ | |
| | Voltage resistance (V/µm) | 570 | | 510 | | 560 | | 530 | | 560 | |

| Measurement temperature (°C) | | 30°C | 90°C | 30°C | 90°C | 30°C | 90°C | 30°C | 90°C | 30°C | 90°C |
|---|---|---|---|---|---|---|---|---|---|---|---|
| Dielectric constant | | | | | | | | | | | |
| | 1 kHz | 10.8 | 11.4 | 10.4 | 10.7 | 10.5 | 10.9 | 11.2 | 12.2 | 10.6 | 10.9 |
| | 10 kHz | 10.6 | 11.0 | 10.1 | 10.5 | 10.2 | 10.6 | 10.8 | 11.4 | 10.4 | 10.7 |

| Dissipation factor (%) | | | | | | | | | | | |
|---|---|---|---|---|---|---|---|---|---|---|---|
| | 1 kHz | 1.6 | 2.7 | 1.5 | 2.5 | 1.6 | 2.7 | 2.0 | 3.2 | 1.8 | 2.5 |
| | 10 kHz | 1.7 | 2.4 | 1.7 | 2.7 | 1.8 | 2.7 | 2.3 | 2.9 | 1.9 | 2.7 |

### Example 12

A film was produced in the same manner as in Example 1 except that the VdF/TFE copolymer (a1) (VdF/TFE = 93/7, melting point: 150°C) was replaced by the VdF/TFE copolymer (a2) (VdF/TFE = 80/20, melting point: 135°C). For the resulting film, the ratio of the α-crystal structure was 0% and the ratio of the β-crystal structure was 100%.

### Example 13

A film was produced in the same manner as in Example 2 except that the VdF/TFE copolymer (a1) (VdF/TFE = 93/7, melting point: 150°C) was replaced by the VdF/TFE copolymer (a3) (VdF/TFE = 82/18, melting point: 137°C). For the resulting film, the ratio of the α-crystal structure was 0% and the ratio of the β-crystal structure was 100%.

### Example 14

A film was produced in the same manner as in Example 1 except that the temperatures of the respective drying furnaces were 80°C, 120°C, 160°C, 160°C, and 160°C. For the resulting film, the ratio of the α-crystal structure was 29.0% and the ratio of the β-crystal structure was 71.0%.

### Example 15

A film was produced in the same manner as in Example 1 except that the temperatures of the respective drying furnaces were 80°C, 120°C, 165°C, 165°C, and 165°C. For the resulting film, the ratio of the α-crystal structure was 25.4% and the ratio of the β-crystal structure was 74.6%.

### Example 16

A film was produced in the same manner as in Example 1 except that the temperatures of the respective drying furnaces were 80°C, 120°C, 155°C, 155°C, and 155°C. For the resulting film, the ratio of the α-crystal structure was 43.0% and the ratio of the β-crystal structure was 57.0%.

### Tests

For the films produced in Examples 12 to 16, the data on volume resistivity, voltage resistance, dielectric constant, and dissipation factor were obtained.

Table 3 shows the results.

**[Table 3]**

| | | Example | | | | | | | | | |
|---|---|---|---|---|---|---|---|---|---|---|---|
| | | 12 | | 13 | | 14 | | 15 | | 16 | |
| (A) Film-forming resin (parts by mass) | | | | | | | | | | | |
| | VdF/TFE (80/20 mol%) | 200 | | | | | | | | | |
| | VdF/TFE (82/18 mol%) | | | 200 | | | | | | | |
| | VdF/TFE (93/7 mol%) | | | | | 200 | | 200 | | 200 | |

| (B) Inorganic oxide particles (parts by mass) | | | | | | | | | | | |
|---|---|---|---|---|---|---|---|---|---|---|---|
| | γ-Al₂O₃ | - | | 10 | | - | | - | | - | |
| | Average primary particle size (nm) | - | | 100 | | - | | - | | - | |
| (B)/(A) (ratio by mass) | | - | | 5/100 | | - | | - | | - | |

| Film properties | | | | | | | | | | | |
|---|---|---|---|---|---|---|---|---|---|---|---|
| | Thickness (µm) | 4.2 | | 4.5 | | 4.0 | | 4.2 | | 4.2 | |
| | Volume resistivity (Ω·cm) | 1.1 x 10¹⁴ | | 3.4 x 10¹⁴ | | 1.1 x 10¹⁴ | | 1.0 x 10¹⁴ | | 1.2 x 10¹⁴ | |
| | Voltage resistance (V/µm) | 500 | | 490 | | 570 | | 570 | | 560 | |

| Measurement temperature (°C) | | 30°C | 90°C | 30°C | 90°C | 30°C | 90°C | 30°C | 90°C | 30°C | 90°C |
|---|---|---|---|---|---|---|---|---|---|---|---|
| Dielectric constant | | | | | | | | | | | |
| | 1 kHz | 10.9 | 12.2 | 11.0 | 11.7 | 10.3 | 11.0 | 10.5 | 10.9 | 10.4 | 10.7 |
| | 10 kHz | 10.7 | 11.5 | 10.7 | 11.2 | 10.2 | 10.5 | 10.2 | 10.4 | 10.1 | 10.3 |

| Dissipation factor (%) | | | | | | | | | | | |
|---|---|---|---|---|---|---|---|---|---|---|---|
| | 1 kHz | 1.2 | 2.2 | 1.5 | 2.4 | 1.6 | 2.7 | 1.5 | 2.7 | 1.7 | 2.9 |
| | 10 kHz | 1.6 | 2.1 | 1.6 | 2.2 | 1.9 | 2.4 | 1.8 | 2.4 | 2.0 | 2.4 |

### Comparative Example 3

A film was produced in the same manner as in Example 1 except that the temperatures of the respective drying furnaces were 80°C, 120°C, 150°C, 150°C, and 150°C.

### Examples 17 and 18

A film was produced in the same manner as in Example 1 except that the temperatures of the respective drying furnaces were as shown in the following Table 4.

Table 4 shows the drying conditions and the corresponding ratios of the α-crystal structure and the β-crystal structure in the films produced in Example 1, Examples 14 to 18, Comparative Example 2, and Comparative Example 3.

When the maximal temperature in the drying furnaces was not higher than the melting point, the ratio of the α-crystal structure was high and the ratio of the β-crystal structure was low. Comparative Example 2 in Table 1 clarifies that the dissipation factor increases as the ratio of the α-crystal structure increases.

Drying at a temperature higher than the melting point can provide a film having a ratio of the β-crystal structure of 50% or more. In particular, drying at 175°C or higher can provide a film having a ratio of the β-crystal structure of 100%.

These results prove that drying the resin having the aforementioned composition at a temperature higher than the melting point is an essential condition for increasing the ratio of the β-crystal structure.

The results further prove that drying the resin having the aforementioned composition in a drying condition higher than the melting point is an essential condition for producing a film having a high dielectric constant and a low dissipation factor.

**[Table 4]**

| | Comparative Example | | Example | | | | | |
|---|---|---|---|---|---|---|---|---|
| | 2 | 3 | 16 | 14 | 15 | 1 | 17 | 18 |
| Film-forming resin | VdF/TFE copolymer (VdF/TFE = 93/7 mol%) (melting point: 150°c) | | | | | | | |
| Drying temperature (°C) (Number of drying furnaces: 5) | 80-120-140-140-140 | 80-120-150-150-150 | 80-120-155-155-155 | 80-120-160-160-160 | 80-120-165-165-165 | 80-120-175-175-175 | 80-120-180-180-180 | 80-120-200-200-200 |
| Ratio of α-crystal (%) | 61.3 | 53.3 | 43.0 | 29.0 | 25.4 | 0 | 0 | 0 |
| Ratio of β-crystal (%) | 38.7 | 46.7 | 57.0 | 71.0 | 74.6 | 100 | 100 | 100 |

### Example 19

### (Production of non-polarized film)

A vinylidene fluoride/tetrafluoroethylene copolymer (TFE/VdF = 7/93) was dissolved in a solvent mixture of methyl ethyl ketone (MEK) and N-methyl-2-pyrrolidone (NMP) (NIPPON REFINE Co., Ltd.), thereby preparing a coating with a solid content of 20 wt%.

Then, the coating was applied onto a PET film (by a casting technique) using a die coater and then dried, thereby providing a 3-µm-thick film. In the drying, the drying furnace was divided into 5 zones (2 m each, 10 m in total), and the drying temperatures of the respective zones were 80°C, 120°C, 175°C, 175°C, and 175°C from the inlet side. The workpiece was passed through the drying furnace at a rate of 7.5 m/min for 1.3 minutes, thereby providing a laminate film comprising a PET film and a fluororesin film disposed on the PET film. Then, the fluororesin film was peeled off the PET film. For the resulting film, the ratio of the α-crystal structure was 0% and the ratio of the β-crystal structure was 100%. The total light transmittance, the haze value, and the coefficient of variation of thickness of the film were determined. The following Table 5 shows the results.

The resulting film was stuck on ITO-coated glass 80Ω (Nippon Sheet Glass Co. Ltd.) using a roll press, and then annealed at 135°C for 12 hours to strengthen the sticking. DAIFREE GF500 (DAIKIN INDUSTRIES, Ltd.) was spin coated on the film to provide a water-repellent layer having a thickness of 0.1 µm.

Then, 20 µL of water was dropped onto the water-repellent layer, and the contact angle therebetween was measured. Thereafter, the waterdrop was connected with the + electrode and the ITO was connected with the - electrode, and a 50 V voltage was applied therebetween and the contact angle was measured. The results are shown in Table 5.

**[Table 5]**

| | Total light transmittance (%) | Total haze (%) | External haze (%) | Internal haze (%) | Coefficient of variation of thickness (%) | Initial contact angle (°) | Contact angle after voltage application (°) |
|---|---|---|---|---|---|---|---|
| Example 19 | 95 | 0.6 | 0.48 | 0.12 | ±2 | 110 | 86 |

As mentioned above, the electrowetting requires a high total light transmittance and a low haze value, as well as a large difference in contact angle of waterdrop before and after the voltage application. With a film having a high melting point, however, the coefficient of variation of thickness was low after the annealing, causing a large difference in contact angle of waterdrop before and after the voltage application.

### INDUSTRIAL APPLICABILITY

The high dielectric film of the present invention has a high dielectric constant and a low dissipation factor, and thus is suitable as a film for electrowetting.

### REFERENCE SIGNS LIST

100: optical element
101: first substrate
102: first electrode
103: high dielectric film
104: partition
105, 705: hydrophobic liquid
106, 706: conductive liquid
107: second electrode
108: second substrate
109: side wall
111: drive element
112: high dielectric inorganic layer
113: water-repellent layer
150, 151, 152, 153: laminate
200: control unit
201: switch
202: power source
702a, 702b, 702c, 702d, 702e: ring-shaped electrode
703: cylindrical insulation layer
707: electrode
714: surface of cylindrical insulation layer
715: translucent top member
716: cylindrical side member
717: translucent bottom member
718: surface layer
A, B: surface of hydrophobic liquid
C: optical axis
z: cell region

## Claims

1. A high dielectric film comprising a vinylidene fluoride (VdF)/tetrafluoroethylene (TFE) copolymer (A), and inorganic oxide particles (B),
wherein copolymer (A) has a VdF/TFE mole ratio of 95/5 to 80/20,
the film includes an α-crystal structure and a β-crystal structure, or includes only a β-crystal structure, and the ratio of the β-crystal structure being 50% or more, and the thickness of the film is 0.01 to 50 µm.

2. The film of claim 1, wherein the particles (B) comprise at least one of
(B1) inorganic oxide particles of a metal element of groups 2-4, 12 or 13 in the periodic table, or inorganic oxide composite particles thereof;
(B2) inorganic oxide composite particles of formula (1):
M¹*ₐ₁*M²*_{b1}*O*_{c1}*
wherein M¹ is a metal element of group 2; M² is a metal element of group 4; a1 is 0.9-1.1; *b1* is 0.9-1.1; *c1* is 2.8-3.2; and M¹ and M² may each include multiple metal elements; and
(B3) inorganic oxide composite particles of silicon oxide and an oxide of a metal element of group 2-4, 12 or 13 of the periodic table.

3. The film of claim 2, wherein the particles (B1) comprise particles of at least one of Al₂O₃, MgO, ZrO₂, Y₂O₃, BeO, and MgO·Al₂O₃.

4. The film of claim 2 or 3, wherein the particles (B1) comprise γ- Al₂O₃.

5. The film of any of claims 2-4, wherein the particles (B2) comprise particles of at least one of BaTiO₃, SrTiO₃, CaTiO₃, MgTiO₃, BaZrO₃, SrZrO₃, CaZrO₃, and MgZrO₃.

6. The film of any of claims 2-5, wherein the particles (B3) comprise particles of at least one of 3Al₂O_{3·}2SiO₂, 2MgO·SiO₂, ZrO_{2·}SiO₂, and M_{g}O·SiO₂.

7. The film of any of claims 1-6, wherein the amount of the particles (B) is 0.01-300 pbw per 100 pbw of the copolymer (A).

8. The film of any of claims 1-7, wherein the particles (B) have an average primary particle size of ≤ 1 µm.

9. An electrowetting device comprising
(i) a first electrode,
(ii) a second electrode,
(iii) a conductive liquid (106) contained between the first and second electrodes and being traversable there between, and
(iv) the film of any of claims 1-8 disposed between the first electrode and the conductive liquid and insulating the first from the second electrode, or comprising
(v) a cylindrical insulator (703) comprising the film of any of claims 1-8,
(vi) a ring-shaped first electrode (702) disposed on the exterior of the cylindrical insulator (703),
(vii) a second electrode (707) disposed opposite to the ring-shaped first electrode (702) across the cylindrical insulator (703), and
(viii) a conductive liquid (706) contained inside the cylindrical insulator (703) and being traversable therein.

## Patentansprüche

1. Hochdielektrischer Film, der ein Vinylidenfluorid (VdF)/Tetrafluorethylen (TFE)-Copolymer (A) und anorganische Oxidteilchen (B) umfasst, wobei das Copolymer (A) ein VdF/TFE Molverhältnis von 95/5 bis 80/20 aufweist,
wobei der Film eine α-Kristallstruktur und eine β-Kristallstruktur einschließt, oder nur eine β-Kristallstruktur einschließt, und das Verhältnis der β-Kristallstruktur 50% oder mehr beträgt und die Dicke des Films 0,01 bis 50 µm beträgt.

2. Film nach Anspruch 1, wobei die Teilchen (B) mindestens einen Vertreter umfassen aus den folgenden
(B1) anorganischen Oxidteilchen eines Metallelements der Gruppen 2-4, 12 oder 13 des Periodensystems oder anorganische Oxidverbundteilchen davon;
(B2) anorganische Oxidverbundteilchen der Formel (1):
M¹ₐ₁M²_{b1}O_{c1}
worin M¹ ein Metallelement der Gruppe 2 ist; M² ein Metallelement der Gruppe 4 ist; a1 0,9-1,1 ist; b1 0,9-1,1 ist; c1 2,8-3,2 ist; und M¹ und M² jeweils mehrere Metallelemente einschließen können; und
(B3) anorganische Oxidverbundteilchen aus Siliziumoxid und einem Oxid eines Metallelements der Gruppen 2-4, 12 oder 13 des Periodensystems.

3. Film nach Anspruch 2, wobei die Teilchen (B1) Teilchen aus mindestens einem aus Al₂O₃, MgO, ZrO₂, Y₂O₃, BeO und MgO·Al₂O₃ umfassen.

4. Film nach Anspruch 2 oder 3, wobei die Teilchen (B1) γ-Al₂O₃ umfassen.

5. Film nach mindestens einem der Ansprüche 2-4, wobei die Teilchen (B2) Teilchen aus mindestens einem aus BaTiO₃, SrTiO₃, CaTiO₃, MgTiO₃, BaZrO₃, SrZrO₃, CaZrO₃ und MgZrO₃ umfassen.

6. Film nach mindestens einem der Ansprüche 2-5, wobei die Teilchen (B3) Teilchen aus mindestens einem aus 3Al₂O₃·2SiO₂, 2MgO·SiO₂, ZrO₂ ·SiO₂ und MgO·SiO₂ umfassen.

7. Film nach mindestens einem der Ansprüche 1-6, wobei die Menge der Teilchen (B) 0,01-300 Gewichtsteile pro 100 Gewichtsteile des Copolymers (A) beträgt.

8. Film nach mindestens einem der Ansprüche 1-7, wobei die Teilchen (B) einen mittleren Primärteilchendurchmesser von ≤ 1 µm aufweisen.

9. Elektrobenetzungsvorrichtung, umfassend:
(i) eine erste Elektrode,
(ii) eine zweite Elektrode,
(iii) eine leitfähige Flüssigkeit (106) die zwischen der ersten und zweiten Elektrode enthalten ist und dazwischen verschiebbar ist, und
(iv) den Film nach mindestens einem der Ansprüche 1-8, der zwischen der ersten Elektrode und der leitfähigen Flüssigkeit angeordnet ist und die erste von der zweiten Elektrode isoliert,
oder umfassend:
(v) eine zylindrische Isolierung (703), die den Film nach mindestens einem der Ansprüche 1-8 umfasst,
(vi) eine ringförmige erste Elektrode (702), die auf der Außenseite der zylindrischen Isolierung (703) angeordnet ist,
(vii) eine zweite Elektrode (707), die gegenüber von der ringförmigen ersten Elektrode (702) auf der zylindrischen Isolierung (703) angeordnet ist,
(viii) eine leitfähige Flüssigkeit (706), die in der zylindrischen Isolierung (703) enthalten ist und darin verschiebbar ist.

## Revendications

1. Film hautement diélectrique comprenant un copolymère de fluorure de vinylidène (FdV)/tétrafluoroéthylène (TFE) (A) et des particules d'oxyde inorganique (B),
dans lequel le copolymère (A) présente un rapport molaire de FdV/TFE allant de 95/5 à 80/20,
le film inclut une structure cristalline α et une structure cristalline β, ou inclut uniquement une structure cristalline β, et le rapport de la structure cristalline β étant supérieur ou égal à 50 %, et l'épaisseur du film va de 0,01 à 50 µm.

2. Film selon la revendication 1, dans lequel les particules (B) comprennent au moins l'un parmi
(B1) des particules d'oxyde inorganique d'un élément métallique des groupes 2-4, 12 ou 13 dans le Tableau périodique des éléments, ou des particules composites d'oxyde inorganique de ceux-ci ;
(B2) des particules composites d'oxyde inorganique de la formule (1) :
M¹*ₐ₁*M²*_{b1}*O*_{c1}*
dans lequel M¹ est un élément métallique du groupe 2; M² est un élément métallique du groupe 4 ; a1 va de 0,9 à 1,1 ; *b1* va de 0,9 à 1,1 ; *c1* va de 2,8 à 3,2 ; et M¹ et M² peuvent chacun inclure plusieurs éléments métalliques ; et
(B3) des particules composites d'oxyde inorganique d'oxyde de silicium et un oxyde d'un élément métallique du groupe 2-4, 12 ou 13 du Tableau périodique des éléments.

3. Film selon la revendication 2, dans lequel les particules (B1) comprennent des particules d'au moins un élément parmi Al₂O₃, MgO, ZrO₂, Y₂O₃, BeO et MgO-Al₂O₃.

4. Film selon la revendication 2 ou 3, dans lequel les particules (B1) comprennent y-Al₂O₃.

5. Film selon l'une quelconque des revendications 2-4, dans lequel les particules (B2) comprennent des particules d'au moins un élément parmi BaTiO₃, SrTiO₃, CaTiO₃, MgTiO₃, BaZrO₃, SrZrO₃, CaZrO₃ et MgZrO₃.

6. Film selon l'une quelconque des revendications 2-5, dans lequel les particules (B3) comprennent des particules d'au moins un élément parmi 3A1₂O₃·2SiO₂, 2MgO·SiO₂, ZrO₂·SiO₂ et MgO·SiO₂.

7. Film selon l'une quelconque des revendications 1-6, dans lequel la quantité de particules (B) va de 0,01 à 300 pbw par 100 pbw du copolymère (A).

8. Film selon l'une quelconque des revendications 1-7, dans lequel les particules (B) présentent une taille moyenne des particules primaires ≤ 1 µm.

9. Dispositif d'électromouillage comprenant
(i) une première éléectrode,
(ii) une seconde électrode,
(iii) un liquide conducteur (106) contenu entre les première et seconde électrodes et pouvant être traversé entre celles-ci, et
(iv) le film selon l'une quelconque des revendications 1-8 disposé entre la première électrode et le liquide conducteur et isolant la première de la seconde électrode, ou comprenant
(v) un isolant cylindrique (703) comprenant le film selon l'une quelconque des revendications 1-8,
(vi) une première électrode en forme d'anneau (702) disposée à l'extérieur de l'isolant cylindrique (703),
(vii) une seconde électrode (707) disposée à l'opposée de la première électrode en forme d'anneau (702) à travers l'isolant cylindrique (703), et
(viii) un liquide conducteur (706) contenu à l'intérieur de l'isolant cylindrique (703) et pouvant être traversé à l'intérieur de celui-ci.
